# EUROPÄISCHE PATENTANMELDUNG

(11) **EP 4 804 359 A1**
(43) Veröffentlichungstag der Anmeldung: **09.09.2026**
(21) Anmeldenummer: 26161171.9
(22) Anmeldetag: 27.02.2026
(51) Int. Cl.: H02G 9/02, F03D 9/25, F03D 80/80, H02G 1/10

(54) **OFFSHORE KABEL, OFFSHORE LEITUNGSSATZ UND OFFSHORE WINDKRAFTANLAGE**

(30) Priorität: 05.03.2025 DE 102025108280
(71) Anmelder: RWE Offshore Wind GmbH, 45141 Essen (DE)
(72) Erfinder: Offermann, Michael, 41517 Grevenbroich (DE)
(74) Vertreter: Cohausz & Florack

(57) **Zusammenfassung**

Der Gegenstand betrifft Leitungen und Kabel, die innerhalb einer Offshore Struktur, insbesondere eines Offshore Windparks und/oder einer Offshore Windkraftanlage verbaut sind. Der Gegenstand betrifft weiter eine Offshore Windkraftanlage mit derartigen Leitungen und Kabeln. Der Gegenstand betrifft weiter einen Offshore Windpark mit entsprechenden Leitungen und Kabeln.

## Beschreibung

Der Gegenstand betrifft Leitungen und Kabel, die innerhalb einer Offshore Struktur, insbesondere eines Offshore Windparks und/oder einer Offshore Windkraftanlage verbaut sind. Der Gegenstand betrifft weiter eine Offshore Windkraftanlage mit derartigen Leitungen und Kabeln. Der Gegenstand betrifft weiter einen Offshore Windpark mit entsprechenden Leitungen und Kabeln.

In Offshore-Windparks spielen sogenannte Inter-Array-Kabel (IAC) eine zentrale Rolle. Diese Kabel verbinden die einzelnen Windkraftanlagen (WKA) untereinander und/oder mit einer zentralen Offshore-Substation (Umspannplattform). Diese Verkabelung bildet das elektrische Netz (Grid) des Windparks, durch das die elektrische Energie aus den einzelnen Windkraftanlagen gebündelt wird und zur Substation transportiert wird. Innerhalb der WKAs wird die Ausgangsspannung auf die sogenannte Gridspannung gesetzt, so dass die IACs mit Gridspannung betrieben werden. Innerhalb der Substation wird die Gridspannung auf die erforderliche Übertragungsspannung (Export Spannung) transformiert und anschließend an Land weitergeleitet.

Inter-Array-Kabel sind üblicherweise für Hochspannungsanwendungen mit einer Spannung von 33 kV bis 66 kV, können aber auch für Spannungen über 100kV, insbesondere für bis zu 132kV oder ggf. bis zu 500kV ausgelegt sein, um die erzeugte elektrische Energie zwischen den Windkraftanlagen und der Substation bei dieser Gridspannung zu transportieren. Durch den Einsatz von bevorzugt dreiphasigen Hochspannungskabeln mit großen Querschnitten wird eine ausreichende Stromtragfähigkeit erreicht, die in modernen Offshore-Windparks nötig ist. Es ist aber auch möglich, dass innerhalb des Grids eine Gleichspannung genutzt wird.

Ein Inter-Array-Kabel umfasst regelmäßig eine Leitung pro Phase, insbesondere daher bei einer AC Übertragung zumindest drei Leitungen bei drei Phasen, die jeweils durch eine bevorzugt mehrschichtige innere Isolation geschützt sind. Diese innere Isolierung (auch Litzenisolation, Leiterisolation oder Hauptisolierung genannt) ist darauf ausgelegt, Spannungsüberschläge zu verhindern.

Um diese Hauptisolierung und die Leitungen ist regelmäßig eine Armierung angebracht, da Inter-Array-Kabel im maritimen Umfeld eingesetzt werden, und eine hohe mechanische Stabilität durch die metallische Armierung gewährleistet ist. Die Armierung umfasst regelmäßig Drähte oder Geflechte aus metallischem Material, bevorzugt verzinktem Stahl oder speziell behandelten Stahlbändern. Die Armierung ist regelmäßig spiralförmig um die Leitungen gewickelt. Diese Armierung schützt die Leitungen innerhalb des Kabels vor mechanischen Beschädigungen durch äußere Einflüsse wie Schiffsanker, Meeresströmungen oder Abrieb durch den Meeresboden.

Um die Armierung ist eine äußere Isolation angebracht. Hier kommen widerstandsfähige Materialien wie z.B. Polyethylen, -propylen, Bitumen oder spezieller Schiffsbaukunststoff zum Einsatz, die korrosionsbeständig sind und auch UV-Strahlung standhalten. Diese Schutzmaßnahmen gewährleisten eine lange Lebensdauer der Inter-Array-Kabel, die in Offshore-Windparks typischerweise für mindestens 25 Jahre ausgelegt sind

Die Inter-Array-Kabel werden eingegraben im Meeresgrund, über dem Meeresgrund oder schwimmend zwischen den einzelnen Windkraftanlagen verlegt. Jede WKA ist über diese Kabel mit der benachbarten Anlage verbunden, wodurch ein Netzwerk entsteht, das den erzeugten Strom zur (ggf. zentralen) Substation leitet.

Das Inter-Array-Kabel wird durch eine Öffnung in eine Gründungsstruktur (die sowohl fest am Meeresboden als auch schwimmend (floating) sein kann) der Windkraftanlage eingeführt und von dort bis zum Cable Hang-Off geführt. Am Cable Hang-Off wird das Kabel mit Hilfe seiner Armierung fixiert, sodass nur geringe Zugkräfte auf die elektrischen Komponenten und Verbindungsstellen des Kabels wirken.

Am Cable Hang-Off wird die äußere Isolation an einer Übergangstelle des Kabels entfernt. Die Armierung wird seitlich umgeschlagen und radial nach außen gespreizt. Diese gespreizte Armierung wird dann mechanisch am Cable Hang Off verklemmt und das Kabel so fixiert. Die nun freiliegenden Leitungen des Kabels werden vereinzelt und münden an ihren jeweiligen abisolierten Enden in einem Verbindungsmittel, welches z.B. als Steckverbinder gebildet ist. Das Verbindungsmittel ist entweder über Verbindungsmuffen oder mit komplementären Verbindungsmittels an Leitungen eines Leitungssatzes mit dem Leitungssatz der Windkraftanlage verbunden. Die Leitungen des Leitungssatzes sind ihrerseits elektrisch mit einer Schaltanlage innerhalb der Windkraftanlage verbunden.

Die Verbindung der Leitungen des Inter-Array-Kabel mit den Leitungen des Leitungssatzes erfolgt traditionell über Steckverbinder und Muffen, die oft vor Ort (on-site) montiert werden müssen. Dies ist ein komplexer und arbeitsintensiver und arbeitssicherheitssensiblerProzess, der speziell geschultes Personal erfordert. Das Arbeiten unter den oft schwierigen Offshore-Bedingungen (z.B. Wind, Regen, Wellengang) kann die Installation zusätzlich verzögern und Fehlerpotenzial erhöhen. Die Herstellung der elektrischen und mechanischen Verbindungen ist fehleranfällig, was zu hohen Wartungskosten und einem erhöhten Risiko für Betriebsunterbrechungen führen kann.

Die Leitungen innerhalb der Inter-Array-Kabel besitzen aufgrund der hohen elektrischen Anforderungen große Leiterquerschnitte. Diese sorgen zusammen mit der elektrischen Abschirmung für ein hohes Gewicht und machen die Leitungen starr und unflexibel, was die Verlegung und den Anschluss im beengten Raum innerhalb des Turms oder Fundamentes der Windkraftanlage erschwert. Das Biegen der starren Kabel ist schwierig, und es besteht die Gefahr von mechanischen Schäden, wenn die Kabel zu stark beansprucht werden.

Das zuvor gesagte gilt auch für sogenannte Export Kabel. Diese werden verwendet, um eine Offshore Windkraftanlage oder eine Offshore Umspannstation mit einer Onshore Anlage, z.B. einem Transition Joint Bay (TJB) zu verbinden. Im Unterschied zu IAC können die Export Kabel auch für eine DC Übertragung ausgelegt sein und haben daher zwei oder drei Leitungen in der gemeinsamen Isolation.. Außerdem haben die Export Kabel in der Regel noch größere Leitungsquerschnitte sowie eine höhere Durchschlagsfestigkeit und sind somit für Spannungen von weit über 66kV, bevorzugt bis hin zu 400 kV ausgelegt. Die Installation dieser Kabel in der Umspannanlage unterliegt jedoch denselben Problemen, wie sie für die IAC geschildert wurden.

Vor diesem Hintergrund lag dem Gegenstand die Aufgabe zu Grunde, die Verbindung zwischen den Kabeln des Windparks und einer Schaltanlage (switchgear) innerhalb der Windkraftanlage zu vereinfachen. Der beengte Verbindungsraum zum Verlegen der Kabel zwischen der Armierungsklemme (Cable Hang Off) und der Schaltanlage soll optimal genutzt werden.

Die zuvor genannte Aufgabe wird gegenständlich gelöst durch ein Offshore-Windpark-Kabel nach Anspruch 1, einen Leitungssatz zum Anschluss des Kabels mit einer Schaltanlage innerhalb der Windkraftanlage nach Anspruch 8, eine Windkraftanlage nach Anspruch 11 sowie einen Windpark nach Anspruch 18.

Im Folgenden werden verschiedene Ausführungsformen des Leitungssatzes, des Kabels, der Windkraftanlage sowie des Windparks beschrieben, wobei die einzelnen Ausführungsformen beliebig miteinander kombiniert werden können.

Die Ausführungen zum Inter-Array-Kabel sowie das Exportkabel in der Beschreibungseinleitung gelten allesamt auch für das gegenständliche Kabel.

Anspruch 1 betrifft ein Offshore-Windpark-Kabel, das speziell konzipiert ist, um die Verbindung zwischen den Kabeln eines Windparks und einer Schaltanlage innerhalb der Windkraftanlage (WKA) zu vereinfachen. Der Gegenstand zielt darauf ab, den begrenzten Verbindungsraum innerhalb der WKA optimal zu nutzen, indem die Verbindungsmittel des Kabels im mit der Schaltanlage verbundenen Zustand nicht unmittelbar nebeneinander liegen, sondern in einer axialen Richtung der Leitungen und oder des Kabels zueinander versetzt angeordnet sind. Dies ermöglicht eine effizientere Nutzung des Verbindungsraums und reduziert potenzielle Probleme bei der Installation und Wartung.

Das Kabel umfasst zumindest zwei Leitungen. Jede der mindestens zwei Leitungen enthält eine metallische Litze (auch Leiter genannt), die ihrerseits von einer Hauptisolation umgeben ist.

Die zumindest zwei Leitungen sind von einer gemeinsamen äußeren Isolation umgeben, was das Kabel als Ganzes schützt. Diese äußere Isolation bietet zusätzlichen Schutz vor Umwelteinflüssen wie Feuchtigkeit und Korrosion, die in maritimer Umgebungen häufig vorkommen. Die gemeinsame Isolation trägt auch zur mechanischen Stabilität des Kabels bei.

Die gemeinsame äußere Isolation ist ausgehend von einer Übergangsstelle hin zu einem Ende des Kabels entfernt und die zumindest zwei Leitungen sind freigelegt. An einer als Übergangsstelle bezeichneten Position im Bereich des Endes des Kabels wird die äußere Isolation entfernt, sodass die beiden Leitungen freigelegt werden. Die Leitungen sind von der Übergangsstelle bis zum Leitungsende von der äußeren Isolation befreit. Dies ermöglicht den direkten Zugang zu den Leitungen für die Verbindung mit der Schaltanlage. Die Freilegung der Leitungen im Bereich des Endes der Kabels erleichtert die Installation und Wartung, da Monteure direkten Zugriff auf die Enden der Leitungen haben. Außerdem sind die freigelegten Leitungen flexibler als das gesamte Kabel. Der radiale Abstand der freigelegten Leitungen zueinander ist variabel, da die Leitungen relativ zueinander bewegt werden können.

Der Leiter einer jeden der Leitungen wird mit einem Verbindungsmittel terminiert. Diese Terminierung stellt sicher, dass die elektrischen und mechanischen Verbindungen zuverlässig und sicher sind. Das Verbindungsmittel kann verschiedene Formen annehmen, insbesondere ein Verbindungsterminal, wie Steckverbinder oder eine Steckbuchse, Muffen oder dergleichen. Die Terminierung ermöglicht einen elektrischen Anschluss mit einer Leitung einer Schaltanlage der WKA.

Die Längen der freigelegten Abschnitte der Leitungen zwischen der Übergangsstelle und den Verbindungsmitteln sind gegenständlich unterschiedlich. Diese unterschiedlichen Längen ermöglichen es, die Verbindungsmittel zueinander versetzt anzuordnen, was den begrenzten Raum innerhalb der WKA effizienter nutzt. Durch diese Anordnung wird das Risiko von Kollisionen und anderen Installationsproblemen reduziert, was die gesamte Installation und Wartung erleichtert. Der Monteur muss für die Herstellung Verbindung einer einzelnen Leitung mit der Schaltanlage nicht ggf. bereits unmittelbar neben dieser herzustellenden Verbindung eine bereits hergestellte Verbindungen seitlich verschieben oder die Leitung seitlich verbiegen. Vielmehr ist für jede herzustellende Verbindung ausreichend Raum vorhanden, da die benachbarten Verbindungen in axialer Richtung der Leitung versetzt sind.

Die Verbindungsmittel sind in der Regel breiter, haben also einen größeren Durchmesser, als die Leitungen selber, was bei der Platzierung mehrerer Verbindungen nebeneinander zu mehreren Nachteilen führen kann. In einer Ebene senkrecht zur axialen Ausbreitungsrichtung der Leitung, in der die Verbindungsmittel nebeneinander liegen, kann in diesem Fall der verfügbare Raum schnell ausgefüllt sein, was besonders in beengten Bereichen problematisch sein kann

Liegen die Verbindungsmittel bei Verlegung in einer Ebene unmittelbar nebeneinander, kann die Wärmeableitung beeinträchtigt sein, was zu einer höheren Betriebstemperatur und erhöhtem elektrischen Widerstand sowie erhöhtem Verschleiß führen kann. Da der verfügbare Raum bei einer Verlegung der Verbindungsmittel innerhalb einer Ebene schnell aufgebraucht ist, müssen die Leitungen ggf. seitlich gebogen werden. Da der Leiter einen erheblich Leitungsquerschnitt von mehreren 100mm² bis zu 1000 mm² hat, erweist sich dieses Biegen in situ als herausfordernd. Außerdem kommt es durch das Verbiegen zu einer Verwinkelung der Verbindungsmittel zueinander, so dass eine Verbindung mit einer Schaltanlage erschwert wird. Die Leitungen verlaufen bei einem Verbiegen nicht mehr parallel zueinander und spannen zueinander Winkel auf. Diese Winkel verhindern das einfache Verbinden mehrerer Leitungen des Kabels mit den dazu kongruenten Leitungen der Schaltanlage.

Um diese Nachteile zu minimieren, wird gegenständlich ein Versatz der Verbindungsmittel relativ zueinander in Längsrichtung der Leitung(en) vorgeschlagen.

Durch den Versatz der Verbindungsmittel zueinander in Längsrichtung der Leitung(en) kann der verfügbare Platz besser genutzt werden, da die Verbindungsmittel nicht nebeneinander in einer Ebene liegen müssen.

Eine hier beschriebene Ebene verläuft in der Regel im Wesentlichen senkrecht zur axialen Erstreckungsrichtung der jeweiligen Leitung, bevorzugt im verbundenen Zustand. Die Längsachse einer Leitung kann eine Flächennormale der Ebene sein. Die Verbindungsmittel liegen gegenständlich in zueinander versetzten Ebenen.

Der Versatz der Verbindungsmittel relativ zueinander ermöglicht eine bessere Luftzirkulation und Wärmeableitung, was dazu beiträgt, dass die Betriebstemperaturen niedriger gehalten werden können. Da die Leitungen nicht mehr seitlich zueinander verbogen werden müssen, wird die mechanische Belastungen der Leitungen reduziert und die Verlegung vereinfacht. Der Zugriff auf die jeweiligen Verbindungsmittel und Verbindungen ist im Wartungsfall erleichtert, da der verfügbare Raum um die Verbindungsmittel herum größer ist. Es gibt mehr Platz zwischen den Verbindungen, was das Inspizieren und Reparieren einfacher macht.

Insgesamt führt der gegenständliche Versatz der Verbindungsmittel relativ zueinander zu einer effizienteren Nutzung des verfügbaren Verbindungsraums.

Gemäß einem Ausführungsbeispiel wird vorgeschlagen, dass an jeweils einem Ende einer jeweiligen Leitung der Leitungen die Hauptisolation entfernt ist und der Leiter freigelegt ist. Es wird vorgeschlagen, dass das Verbindungsmittel an dem freigelegten Leiter angeordnet ist. Durch das Freilegen des Leiters wird sichergestellt, dass das Verbindungsmittel einen festen und sicheren, sowie elektrisch leitenden Kontakt mit dem leitenden Material des Leiters hat.

Gemäß einem Ausführungsbeispiel wird vorgeschlagen, dass die zumindest zwei Leitungen von einer gemeinsamen Armierung umgeben sind. Die gemeinsame Armierung verleiht dem Kabel eine zusätzliche mechanische Stabilität, die besonders in den rauen Bedingungen des Offshore-Bereichs von Bedeutung ist. Diese Robustheit schützt das Kabel vor den extremen Umweltbedingungen und mechanischer Belastung. Durch die gemeinsame Armierung wird sichergestellt, dass alle Leitungen gleichmäßig geschirmt sind. Dies ist besonders wichtig in Offshore-Umgebungen, wo elektrische Störungen durch Blitzschläge und andere natürliche Phänomene auftreten können. Eine konsistente Schirmung erhöht die elektrische Sicherheit und Zuverlässigkeit des Systems.

Gemäß einem Ausführungsbeispiel wird vorgeschlagen, dass eine Längendifferenz zwischen der ersten Leitungslänge und der zweiten Leitungslänge zwischen 0,5m und 1,5m liegt. Die Leitungslänge wird bevorzugt ausgehend von der Übergangsstelle bis entweder dem stirnseitigen Ende des Verbindungsmittels oder dem Beginn des mit dem Leiter verbundenen Verbindungsmittels gemessen. Dies kann auch als freie Länge der Leitung verstanden werden. Die Leitungen sind ausgehend von der Übergangsstelle von der gemeinsamen äußeren Isolation befreit. Die Leitungen sind unterschiedlich lang, so dass die Leitungsenden und respektive auch die daran angeordneten Verbindungsmittel relativ zueinander versetzt sind. Die Verbindungsmittel liegen in zueinander verschiedenen Ebenen. Der Versatz der Verbindungsmittel zueinander ist bevorzugt an die axiale Ausdehnung der Verbindungsmittel angepasst. Ein Verbindungsmittel ist in der Regel zwischen 0,5 m und 1m lang, kann aber auch mehr als 1m lang sein, z.B. 1,5m. Der Versatz ist bevorzugt derart, dass sich die Verbindungsmittel nicht überschneiden. In einem um das Verbindungsmittel radial verlaufenden, gedachten zylindrischen Ring befindet sich bevorzugt im verbundenen Zustand der Verbindungsmittel mit Verbindungsmitteln der Schaltanlage kein weiteres Verbindungsmittel.

Gemäß einem Ausführungsbeispiel wird vorgeschlagen, dass in dem Kabel zumindest drei Leitungen angeordnet sind. Die Leitungen sind bevorzug in der gemeinsamen Isolation angeordnet. Auch wird vorgeschlagen, dass eine dritte Leitungslänge einer dritten Leitung der Leitungen zwischen der Übergangsstelle und dem Verbindungsmittel verschieden ist zu der ersten Leitungslänge und der zweiten Leitungslänge. Dadurch, dass die Leitungslängen der drei Leitungen voneinander verschieden sind, wird eine Überlappung zwischen jeweils zwei Verbindungsmitteln in dem gedachten Ring um ein jeweiliges Verbindungsmittel vermieden.

Bevorzugt sind die Leitungslängen aller Leitungen innerhalb des Kabels voneinander verschieden und eine Überlappung aller Verbindungsmittel wird vermieden. Bevorzugt ist der jeweils geringste Längenunterschiede zwischen jeweils zwei Leitungen zwischen 0,5m und 1,5m.

Beim Verlegen der Leitungen in dem Verbindungsraum muss das Verbindungsmittel mit einer Leitung oder einem Verbindungsmittel, das mit der Schaltanlage lösbar verbunden ist, verbunden werden. Diese Leitung, der Leitungssatz oder das Verbindungsmittel für die Schaltanlage ist in der Regel lösbar (z.B. verschraubt oder verklemmt) mit der Schaltanlage verbunden und kann in seiner Länge nicht verändert werden. Das bedeutet, dass die Verbindung nur in einem begrenzten Raumbereich möglich ist in den die lösbar mit der Schaltanlage verbundene Leitung verschwenkt werden kann. Um die jeweilige Leitung des Kabels ausgehend von dem Cable Hang off auch tatsächlich bis in diesen Raumbereich führen zu können, insbesondere bei produktionsbedingten Abweichungen der Leitungslängen oder aber auch zum Ausgleich von thermischer Ausdehnung der Leitung, wird vorgeschlagen, dass die Leitungen des Kabel jeweils in einer offenen oder geschlossenen Schlaufe von der Übergangsstelle hin zu dem Verbindungsmittel verlaufen. Durch die Schlaufe ergibt sich für den Monteur die Möglichkeit, die Leitung des Kabels im Verbindungsraum bedarfsgerecht an das Verbindungsmittel der Schaltanlage heranzuführen. Das Verbindungsmittel der Schaltanlage kann, wie noch beschrieben wird, eine Leitung, ein Verbindungsstecker, eine Verbindungsbuchse, eine Verbindungsmuffe oder dergleichen sein. Die Schlaufe ermöglicht auch einen Ausgleich einer thermisch bedingten Längenausdehnung der Leitung und/oder des Kabels, ohne dass es zu hierdurch bedingte relevanten Zug- oder Druckkräften an den Verbindungsmitteln kommt.

Ein weiterer Gegenstand ist ein Leitungssatz nach Anspruch 8. Ein solcher Leitungssatz ist bevorzugt an einem Ende komplementär zu den Leitungen des Kabels ausgeführt und eignet sich zur Verbindung der Leitungen des Kabels mit der Schaltanlage. Der Leitungssatz ist bevorzugt lösbar mit der Schaltanlage verbunden und verläuft von der Schaltanlage in den Verbindungsraum. Dort sind die Leitungen des Leitungssatzes mit den Leitungen des Kabels elektrisch verbunden. Da, wie beschrieben, die Leitungen des Kabels in ihrem Endbereich einen Versatz zueinander haben, wird vorgeschlagen, dass dieser Versatz in den Leitungen des Leitungssatzes gespiegelt wird.

Es wird vorgeschlagen, dass sich eine erste Leitungslänge einer ersten der Leitungen des Leitungssatzes von einer zweiten Leitungslänge einer zweiter der Leitungen des Leitungssatzes unterscheidet. Der Versatz entspricht bevorzugt dem Versatz zumindest zweiter der Leitungen des Kabels. Es wird für jede Leitung des Kabels eine entsprechende Leitung des Leitungssatzes bereitgestellt, die im verlegten Zustand in dem Raumbereich (Verbindungsraum) endet, in dem auch die Leitung des Kabels im verlegten Zustand endet.

Auch wird vorgeschlagen, dass die Längendifferenzen der Leitungen des Leitungssatzes den Längendifferenzen der Leitungen des Kabels entsprechen. Auch wird vorgeschlagen, dass die Anzahl der Leitungen des Leitungssatzes der Anzahl der Leitungen des Kabels entsprechen.

Gemäß einem Ausführungsbeispiel wird vorgeschlagen, dass die Leitungen eine Durchschlagfestigkeit von zumindest 19kV, 33kV oder 66kV und bis zu 100kV aufweisen. Die Isolierung ist insbesondere für eine Leiter-Erde Spannung ausgelegt. Dies betrifft die Leitungen des Kabels und/oder die Leitungen des Leitungssatzes. Hierdurch wird sichergestellt, dass die Leitungen den Anforderungen an einen Windpark genügen. Die Durchschlagsfestigkeit liegt bevorzugt bei mehr als dem doppelten, bis hin zum dreifachen der Gridspannung des Windparks und/oder der Spannung zwischen Umspannstation und Onshore TJB.

Ein weiterer Aspekt betrifft eine Offshore Windkraftanlage nach Anspruch 11. Dies kann sowohl eine Offshore Windkraftanlage mit einer Windturbine sein als auch eine Offshore Substation. Die Windkraftanlage kann über eine Gründungsstruktur im Boden gegründet sein oder auch eine schwimmende Anlage, eine sogenannte Floating Anlage sein.

Das gegenständliche Kabel ist zunächst an einem Cable Hang Off fixiert. Im Bereich dieser Fixierung liegt die Übergangsstelle. An der Übergangsstelle sind die Leitungen des Kabels freigelegt und die gemeinsame äußere Isolation ist entfernt. Ausgehend von dieser Übergangsstelle haben die einzelnen Leitungen des Kabels unterschiedliche Leitungslängen, d.h. sie haben unterschiedliche Längen von der Übergangsstelle hin zu ihrem stirnseitigen Ende, an dem ein Verbindungsmittel angeordnet ist. Die Leitungslängen sind dergestalt, dass die Leitungen bis in einen Verbindungsraum geführt werden können. Der Verbindungsraum ist ein Volumen innerhalb der Windkraftanlage, bevorzugt innerhalb eines Turms der Windkraftanlage, in dem die Leitungen des Kabels mit Leitungen des Leitungssatzes und mithin der Schaltanlage der Windkraftanlage verbunden werden. Innerhalb des Verbindungsraums werden die Leitungen des Kabels über ihre Verbindungsmittel mit den Leitungen des Leitungssatzes verbunden.

Die Windkraftanlage umfasst eine Schaltanlage, die über Leitungen des Leitungssatzes mit den Leitungen des Kabels elektrisch kontaktiert wird. Der Leitungssatz, insbesondere der Leiter der Leitungen des Leitungssatzes sind an einem Ende mit Anschlüssen der Schaltanlage der Windkraftanlage elektrisch verbunden. An dem anderen Ende sind die Leiter der Leitungen des Leitungssatzes mit den Leitern der Leitungen des Kabels elektrisch verbunden. Es wird vorgeschlagen, dass durch die verschiedenen Leitungslängen der Leitungen des Kabels und der Leitungen des Leitungssatzes die Verbindungsmittel in Verlaufsrichtung der Leitungen relativ zueinander versetzt sind. Somit kann sichergestellt werden, dass innerhalb einer Ebene senkrecht zu einer Achse einer Leitung keine zwei Verbindungsmittel innerhalb des Verbindungsraums angeordnet sind.

Gemäß einem Ausführungsbeispiel wird vorgeschlagen, dass das Kabel unterhalb einer Wasseroberfläche durch eine Einführung in den Turm der Windkraftanlage eingeführt ist und von der Einführung zu dem Cable Hang Off geführt ist. Das Kabel ist ein IAC, welches Windkraftanlagen innerhalb eines Windparks verbindet oder ein Exportkabel, welches eine Substation mit einem TJB verbindet.

Gemäß einem Ausführungsbeispiel wird vorgeschlagen, dass an der Übergangsstelle die Armierung radial gespreizt ist und in dem Cable Hang Off fixiert ist. Die radial gespreizte Armierung wird in dem Cable Hang Off eingespannt. Das Kabel wird in dem Cable Hang Off fixiert. Ausgehend von dem Cable Hang Off hin zum Verbindungsraum sind die Leitungen des Kabels im wesentlichen frei von Zugspannungen des Kabels jenseits des Cable Hang Offs. Dadurch wird die mechanische Belastung der elektrischen Verbindung der Verbindungsmittel reduziert.

Gemäß einem Ausführungsbeispiel wird vorgeschlagen, dass das Verbindungsmittel des Leitungssatzes ein Hochvolt-Steckverbinder ist und dass das Verbindungsmittel des Kabels eine Hochvolt-Verbindungsbuchse ist. Das Verbindungsmittel des Kabels und das Verbindungsmittel des Leitungssatzes verhalten sich zueinander bevorzugt wie Stecker und Buchse, wobei bevorzugt ein konischer Steckverbinder mit entsprechender konischer Buchse ist.

Die Steckverbindung ist bevorzugt aus einem male- und einem female-Verbinder gebildet, die durch eine axiale Einsteckbewegung miteinander verbunden werden. Die konische Form sorgt für eine automatische Zentrierung und eine gleichmäßige Kontaktkraftverteilung entlang der Kontaktflächen. Dies ermöglicht eine hochgradig verlustarme Stromübertragung und reduziert mechanische Spannungen im Verbindungspunkt.

Zusätzlich weist die Steckverbindung bevorzugt eine Abdichtung auf, die sowohl vor Feuchtigkeit als auch vor Verschmutzungen schützt, was insbesondere in den rauen Offshore-Umgebungen von Vorteil ist. Die mechanische Verriegelung erfolgt mittels einer axialen Schraubverbindung oder durch ein Schnellspannsystem, das eine schnelle Demontage und Wiederverbindung im Wartungsfall erlaubt.

Durch diese Bauweise wird eine robuste und langlebige Verbindung den Leitungen des Kabels und den Leitungen des Leitungssatzes, mithin dem Switchgear geschaffen, die den Anforderungen moderner Offshore-Windkraftanlagen entspricht.

Für Hochvolt-Anwendungen, insbesondere im Spannungsbereich zwischen 62 kV und 200 kV sowie darüber hinaus, sind spezielle Anforderungen an die Steckverbindung zu erfüllen, um die elektrische, mechanische und thermische Integrität der Verbindung sicherzustellen.

Die Hochvolt-Steckverbindung verwendet Hochleistungs-Isolationsmaterialien, wie Epoxidharz oder Silikon, die eine hohe Spannungsfestigkeit aufweisen und die Gefahr von Teilentladungen minimieren. Bevorzugt ist eine mehrschichtige Struktur der Isolation, die für eine optimierte Feldsteuerung sorgt und Durchschläge auch bei Spitzenbelastungen verhindert.

Darüber hinaus sind eingebaute Feldsteuerungselemente vorgeschlagen, wie kapazitive oder resistive Feldsteuerungskörper, die eine gleichmäßige Feldverteilung verhindert und Hotspots vermeiden.

Die Kontaktflächen des konischen Steckverbinders sind bevorzugt aus korrosionsbeständigen und leitfähigen Materialien, wie vergoldetem Kupfer oder silberbeschichtetem Aluminium gebildet, um den elektrischen Übergangswiderstand zu minimieren.

Die Steckverbindung ist bevorzugt zumindest teilweise elektrisch abgeschirmt, um die Bildung von störenden elektrischen Feldern außerhalb der Verbindung zu verhindern. Die Abschirmung kann durch integrierte metallische Gehäuse und leitfähige Schichten in der Isolierung realisiert werden.

Das Stecksystem ist bevorzugt zumindest teilweise gegen Feuchtigkeit, Salznebel, Schmutz und andere Umwelteinflüsse abgedichtet. Es erfüllt Schutzklassen wie IP68 oder höher. Das Material der Steckverbindung bevorzugt ist UV-beständig und korrosionsresistent, um eine lange Lebensdauer in Offshore- und Onshore-Anwendungen zu gewährleisten.

Für Anwendungen bei Hochspannungen von über 200 kV werden zusätzliche Maßnahmen wie längere Kriechstrecken, verbesserte Feldsteuerungssysteme und verbesserte Isolierstoffe eingesetzt.

Gemäß einem Ausführungsbeispiel wird vorgeschlagen, dass jeweils ein Hochvolt Steckverbinder einer Leitung des Kabels und ein Hochvolt Steckverbinder einer Leitung des Leitungssatzes mit einer gemeinsamen Verbindungsmuffe verbunden sind und eine elektrische Verbindung zwischen der Steckverbindern über die Verbindungsmuffe gebildet ist.

Eine Verbindungsmuffe kann dazu dienen, Hochvolt-Steckverbinder eines Kabels und eines Leitungssatzes zu koppeln, um eine elektrische Verbindung zwischen den Leitungen herzustellen. Die Verbindungsmuffe ist speziell für den Hochspannungsbereich (62 kV bis 200 kV oder darüber) ausgelegt und gewährleistet eine sichere, verlustarme und robuste Verbindung.

Die Verbindungsmuffe hat ein Gehäuse. Das Gehäuse ist bevorzugt druck- und temperaturbeständig und schützt die Verbindung vor äußeren Einflüssen wie Feuchtigkeit, Schmutz und mechanischen Belastungen. Die Verbindungsmuffe hat bevorzugt zumindest eine Dichtung (z. B. O-Ringe, Flanschdichtungen), die Schutzarten bis IP68 oder höher gewährleisten.

Die Verbindungsmuffe enthält Halterungen, die die Hochvolt-Steckverbinder der Kabelleitung und des Leitungssatzes aufnehmen. Diese Halterungen sind so gestaltet, dass die Steckverbinder exakt ausgerichtet und mechanisch fixiert werden. Die Halterung ist bevorzugt geometrisch komplementär zu dem Steckverbinder gebildet. Die Halterungen verfügen bevorzugt über Spannmechanismen, die Vibrationen und thermische Ausdehnungen ausgleichen.

Im Inneren der Muffe befindet sich ein Verbindungselement (z. B. Kupferschiene, Mehrdrahtleitung oder verzinnte Kontaktfläche), das die elektrischen Kontakte der Steckverbinder verbindet. Für Hochstromanwendungen enthält die Verbindungsmuffe optional passive Kühlrippen oder aktive Kühlsysteme, um die Wärmeentwicklung im Inneren der Muffe effizient abzuführen.

Der Hochvolt-Steckverbinder des Kabels und der Hochvolt-Steckverbinder des Leitungssatzes werden in die vorgesehenen Halterungen der Verbindungsmuffe eingebracht. Nach dem Einsetzen der Steckverbinder wird bevorzugt eine mechanische Verriegelung aktiviert, die eine stabile Verbindung sicherstellt und Zugkräften widersteht. Die elektrischen Kontakte der Steckverbinder werden über das innenliegende Verbindungselement mechanisch und elektrisch miteinander gekoppelt.

Ein weiterer Aspekt ist ein Windpark nach Anspruch 15. Der Windpark umfasst mindestens zwei Windkraftanlagen, die über Kabel, insbesondere ein Inter-Array-Kabel (IAC) elektrisch miteinander verbunden sind. Die Windkraftanlagen können entweder Windturbinen oder Umspannstationen (Substations) sein.

Die Windturbinen sind über Kabel, insbesondere Hochvolt-Inter-Array-Kabel miteinander verbunden. Jede Turbine ist mit einem Transformator ausgestattet, der die Generatorspannung auf die Spannungsebene der Gridspannung (z. B. 66 kV, 132 kV) transformiert. Eine oder mehrere Substationen dienen als zentrale Sammelpunkte im Windpark. Hier werden die elektrischen Leistungen aus den Inter-Array-Kabeln gesammelt, gebündelt und auf eine höhere Spannungsebene (z. B. 220 kV oder 400 kV) transformiert, bevor die Energie in das Exportkabel eingespeist wird.

Die Windkraftanlagen sind über Kabel verbunden, die an ihren Enden zueinander versetzte Verbindungsmittel verwenden.

Ein Exportkabel transportiert die gebündelte elektrische Leistung von der Substation zur Transition Joint Bay (TJB), die die Verbindung zum landseitigen Netz herstellt.

Nachfolgend wird der Gegenstand anhand einer Ausführungsbeispiele zeigenden Zeichnung näher erläutert. In der Zeichnung zeigen:
- Fig. 1: einen Windpark mit Windturbinen und Substation sowie einen Transition Joint Bay gemäß einem Ausführungsbeispiel;
- Fig. 2: eine schematische Ansicht eines Kabels gemäß einem Ausführungsbeispiel;
- Fig. 3: eine schematische Ansicht eines Switch Gears mit einem Leitungssatz verbunden mit einem Kabel gemäß einem Ausführungsbeispiel;
- Fig. 4: eine schematische Darstellung eines Steckverbinders gemäß einem Ausführungsbeispiel;
- Fig. 5: eine schematische Darstellung einer Verbindungsmuffe gemäß einem Ausführungsbeispiel;

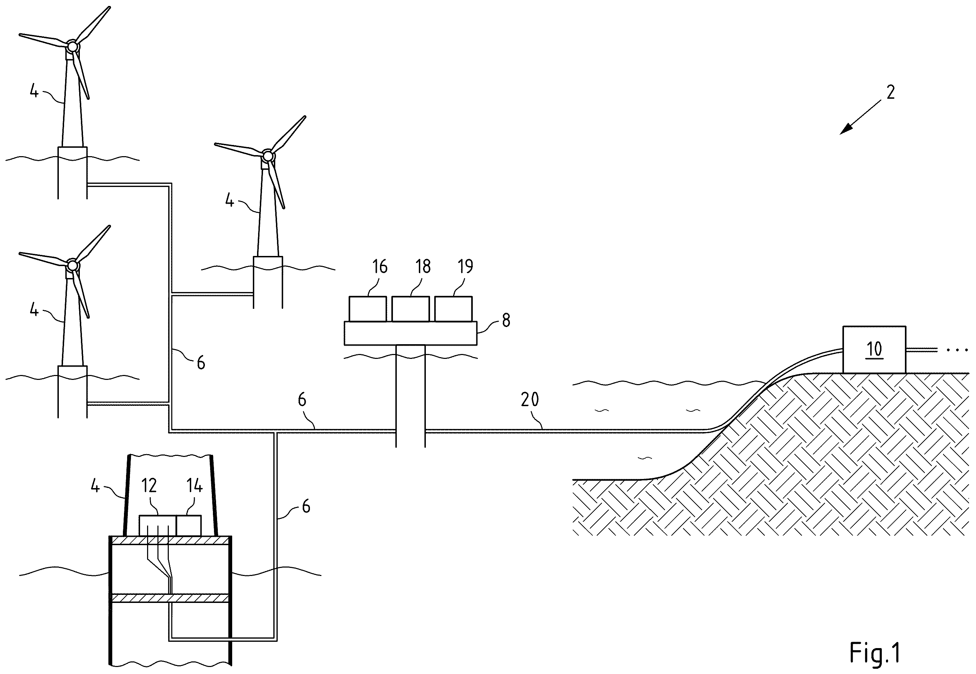

Fig 1 zeigt einen Windpark 2. Der Windpark 2 umfasst eine Mehrzahl von Windkraftanlagen 4, die elektrisch über ein Inter-Array-Kabel (IAC) 6 miteinander verbunden sind. Die Windkraftanlagen (WKA) 4 sind als Windturbinen ausgebildet und weisen jeweils ein Switchgear 12 sowie einen Transformator 14 auf. In Fig. 1 ist das Innere einer WKA 4 nur in der unteren WKA 4 gezeigt. Der Transformator 14 innerhalb jeder WKA 4 transformiert die Generatorspannung auf die Betriebsspannung des IAC 6, während das Switchgear 12 die elektrische Energie schaltet und die WKA 4 bzw. den Transformator 14 mit dem IAC 6 elektrisch verbindet, um elektrische Energie in das IAC 6 einzuspeisen.

Die WKAen 4 sind über das IAC 6 mit zumindest einer (ggf. zentralen) Substation 8 elektrisch verbunden. Die Substation 8 umfasst auch ein Switchgear 16, das die eingehende Energie aus den WKAen 4 schaltet. Weiterhin ist innerhalb der Substation 8 ein Transformator 18 angeordnet, der die Spannungsebene des IAC 6 auf eine höhere Spannungsebene transformiert. Die transformierte Spannung wird innerhalb der Substation 8 durch ein weiteres Switchgear 19 geleitet und von dort in ein Exportkabel 20 eingespeist.

Das Exportkabel 20 verbindet die Substation 8 mit einem Transition Joint Bay (TJB) 10, die die Schnittstelle zwischen dem Offshore-Windpark 2 und dem landseitigen Netz bildet. Das TJB 10 ist so ausgestaltet, dass es eine mechanische und elektrische Verbindung zwischen dem Exportkabel 20 und dem landseitigen Netz herstellt.

Elektrische Energie wird in den WKAen 4 erzeugt, über die Transformatoren 14 der WKAen 4 auf die Spannungsebene der Gridspannung transformiert und über das Switchgear 12 in das IAC 6 eingespeist. Von dort wird die Energie in die Substation 8 geleitet, in der sie von mehreren WKAen 4 eingeht und auf eine höhere Spannungsebene (Exportspannung) transformiert wird. Die Energie wird anschließend mit der Exportspannung in das Exportkabel 20 eingespeist, das die Energie zur TJB 10 weiterleitet. Von dort erfolgt die Übergabe an einen landseitigen Netzanschlusspunkt.

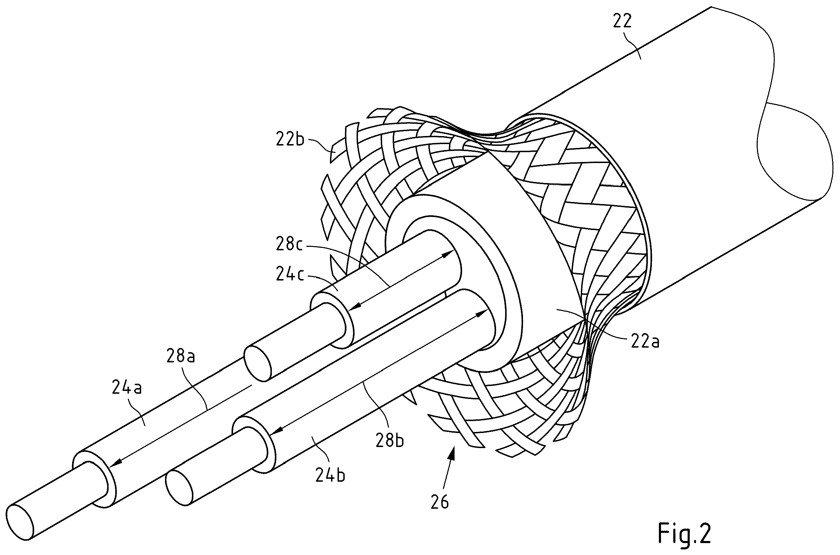

Fig. 2 zeigt ein Ende eines Kabels 22 (IAC 6 oder Exportkabel 20) mit drei Leitern 24a-c. Der Aufbau eine solchen Kabels 22 ist an sich bekannt. Das Kabel 22 hat eine äußere Isolation 22a mit einer Armierung 22b. An einer Übergangsstelle 26 ist die Isolation 24a entfernt. Die Leitungen 24a-c sind ausgehend von der Übergangsstelle 26 hin zu deren Enden frei von der Isolation 22a.

An der Übergangsstelle 26 ist die Armierung 22b radial nach außen gespreizt, um das Kabel 22 an einem Cable Hang Off befestigt zu werden.

Die Leitungen 24a-c haben, wie dargestellt, voneinander verschiedene Leitungslängen 28a-c. An den Enden der Leitungen 24a-c sind die Leiter der Leitungen 24a-c freigelegt und die Leiternisolation ist entfernt.

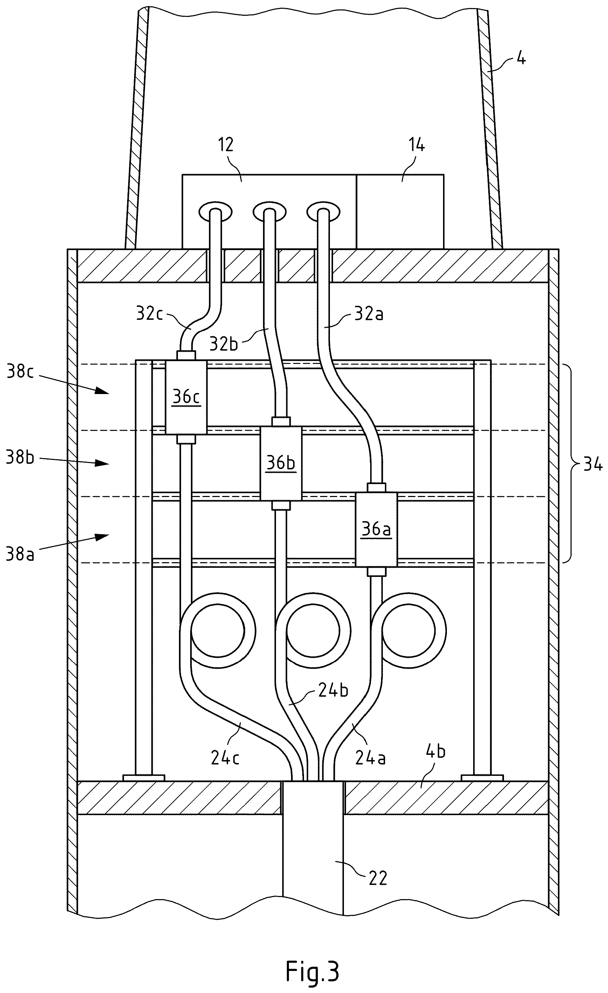

Fig 3 zeigt schematisch das Innere eines Turms 4a einer WKA 4. In dem Turm 4a ist auf einer Plattform ein Switchgear 12 sowie ein Transformator 14 aufgestellt.

An dem Switchgear 12 sind an Anschlussbuchsen Leitungen 32a-c eines Leitungssatzes 32 befestigt. Die Leitungslängen der Leitungen 32a-c sind voneinander verschieden. Die Leitungen 32a-c können entsprechend der Leitungen 24a-c gebildet sein.

An einem Cable Hang Off 4b der WKA 4 ist das Kabel 22 befestigt. Ausgehend von dem Hang Off verlaufen die Leitungen 24a-c jeweils in einer optionalen geschlossenen Schlaufe hin zu einem Verbindungsraum 34. Ein Verbindungsraum 34 kann als räumliche Erstreckung innerhalb des Turms 4a verstanden werden, ohne dass dieser Raum körperlich strukturell durch Wände oder Böden abgegrenzt sein muss, der Verbindungsraum 34 kann aber auch ein körperlich strukturell abgegrenzter Bereich sein. Innerhalb der Verbindungsraum 34 sind die Leitungen 24a-c mit den Leitungen 32a-c elektrisch leitend verbunden.

Zu erkennen ist, dass durch die voneinander verschiedenen Leitungslängen 28a-c die Verbindungsmittel 36a-c in einer axialen Richtung zueinander versetzt sind. Durch diesen Versatz ist umlaufend um die Verbindungsmittel 36a-c in einem gedachten Ring 38a-c jeweils kein weiteres Verbindungsmittel 36a-c vorhanden. Der Versatz ermöglicht es, die Verbindungsmittel 36a-c ohne Überlappung zu verbinden.

Auch zu erkennen ist, dass die Leitungen 24a-c zwischen dem Cable Hang Off 4b und ihrem jeweiligen Verbindungsmittel 36 jeweils in einer geschlossenen Schlaufe verlegt sind. Durch die Schlaufe ergibt sich eine verbesserte Flexibilität der Leitungen 24a-c um diese in den Verbindungsraum 34 zu verlegen und dort lagerichtig und mit der richtigen Ausrichtung zu den Leitungen 32a-c anzuordnen.

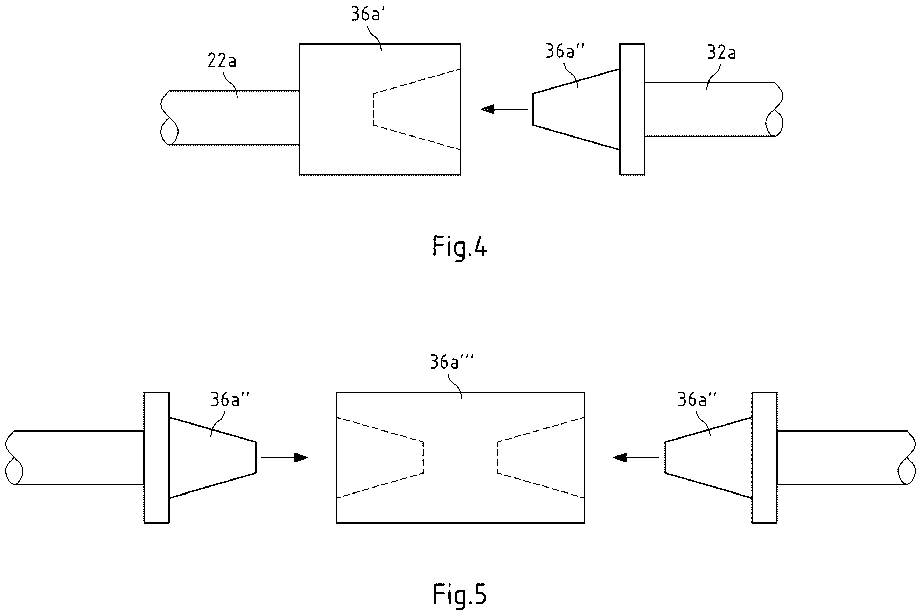

Fig. 4 zeigt schematisch eine Steckverbindung zwischen einer Leitung 24a und einer Leitung 32b. Die Leitung 24a ist an ihrem Ende abisoliert und der Leiter ist elektrisch leitend mit einer Steckbuchse 36a' verbunden. Die Steckbuchse 36a' ist ein Verbindungsmitte 36a. Die Steckbuchse 36a' hat ein konisch geformtes Verbindungselement. Geometrisch hierzu kongruent ist ein Verbindungsstecker 36a" als Verbindungsmittel 36 für eine Leitung 32a geformt. Zur elektrischen Kontaktierung wird der Verbindungsstecker 36a" in die Steckbuchse 36a' eingesteckt.

Neben eine Steckverbindung mittels Stecker und Buchse kann auch eine Verbindungsmuffe 36a‴ vorgesehen sein, wie in Fig. 5 gezeigt.

Die Verbindungsmuffe 36a‴ hat beidseitige eine Buchse zur Aufnahme jeweils eines Steckers 36a", welcher jeweils eine Leitung 24a, 32a terminiert. Die Stecker 36a" werden in an sich bekannter Weise mit der Verbindungsmuffe 36a‴ verbunden.

Für jedes Leiterpaar 24a, 32a; 24b, 32b; 24c, 32c ist jeweils ein Verbindungsmittel 36, z.B. in der genannten Form vorgesehen, um die Leitungen 24a-c des Kabels 22 mit den Leitungen 32a-c des Leitungssatzes 32 zu verbinden.

### Bezugszeichenliste

- 2: Windpark
- 4: Windturbinen, Windkraftanlage
- 4a: Turm
- 4b: Cable Hang Off
- 6: Inter-Array-Kabel
- 8: Substation
- 10: Transition Joint Bay
- 12: Switchgear
- 14: Transformator
- 16: Switchgear
- 18: Transformator
- 19: Switchgear
- 20: Exportkabel
- 22: Kabel
- 22a: Isolation
- 22b: Armierung
- 24a-c: Leitungen
- 26: Übergangsstelle
- 28a-c: Leitungslängen
- 32: Leitungssatz
- 32a-c: Leitungen
- 34: Verbindungsraum
- 36: Verbindungsmittel
- 36a-c: Verbindungsmittel
- 36a': Steckbuchse
- 36a": Stecker
- 36a‴: Verbindungsmuffe
- 38a-c: Ring

## Patentansprüche

1. Offshore-Windpark-Kabel umfassend,
- zumindest zwei Leitungen mit jeweils einem von einer Leiterisolation umgebenen metallischen Leiter,
- wobei die zumindest zwei Leitungen von einer gemeinsamen äußeren Isolation umgeben sind,
- wobei die gemeinsame äußere Isolation ausgehend von einer Übergangsstelle hin zu einem Ende des Kabels entfernt ist und die zumindest zwei Leitungen freigelegt sind,
- wobei der Leiter einer jeweiligen Leitung der Leitungen mit einem Verbindungsmittel terminiert ist, und
- eine erste Leitungslänge einer ersten Leitung der Leitungen zwischen der Übergangsstelle und dem Verbindungsmittel verschieden ist zu einer zweiten Leitungslänge einer zweiten Leitung der Leitungen zwischen der Übergangsstelle und dem Verbindungsmittel.

2. Kabel nach Anspruch 1,
**dadurch gekennzeichnet,**
- **dass** an jeweils einem Ende einer jeweiligen Leitung der Leitungen jeweils die Leiterisolation entfernt ist und der Leiter freigelegt ist, und das Verbindungsmittel an dem freigelegten Leiter angeordnet ist und/oder dass die zumindest zwei Leitungen von einer gemeinsamen Armierung umgeben sind.

3. Kabel nach einem der vorangehenden Ansprüche 1 bis 2,
**dadurch gekennzeichnet,**
- **dass** ein Längendifferenz zwischen der ersten Leitungslänge und der zweiten Leitungslänge zwischen 0,5m und 1,5m liegt.

4. Kabel nach einem der vorangehenden Ansprüche 1 bis 3,
**dadurch gekennzeichnet,**
- **dass** eine dritte Leitungslänge einer dritten Leitung der Leitungen zwischen der Übergangsstelle und dem Verbindungsmittel verschieden ist zu der ersten Leitungslänge und der zweiten Leitungslänge, insbesondere
- **dass** eine Längendifferenz zwischen der ersten Leitungslänge und der dritten Leitungslänge zwischen 1,5m und 2,5m liegt.

5. Kabel nach einem der vorangehenden Ansprüche 1 bis 4,
**dadurch gekennzeichnet,**
- **dass** die Leitungen jeweils in einer Schlaufe von der Übergangsstelle hin zu dem Verbindungsmittel verlaufen.

6. Leitungssatz, umfassend,
- zumindest zwei Leitungen,
- wobei die Leitungen jeweils einen Leiter aufweisen, der von einer Leiterisolation umgeben ist,
- wobei der Leiter einer jeweiligen der Leitungen mit einem Verbindungsmittel terminiert ist, und
- wobei sich eine erste Leitungslänge einer ersten der Leitungen von einer zweiten Leitungslänge einer zweiter der Leitungen unterscheidet.

7. Leitungssatz nach Anspruch 6,
**dadurch gekennzeichnet,**
- **dass** ein Längendifferenz zwischen der ersten Leitungslänge und der zweiten Leitungslänge 0,5m und 1,5m liegt und/oder
- **dass** eine dritte Leitungslänge einer dritten Leitung der Leitungen verschieden ist zu der ersten Leitungslänge und der zweiten Leitungslänge.

8. Leitungssatz nach einem der vorangehenden Ansprüche 6 oder 7,
**dadurch gekennzeichnet,**
- **dass** die Leitungen eine Durchschlagfestigkeit von zumindest 100kV aufweisen.

9. Windkraftanlage umfassend
- ein Kabel nach einem der Ansprüche 1 bis 7, das zu einem Cable Hang Off geführt ist und an der Übergangsstelle in dem Cable Hang Off fixiert ist, wobei
- die freigelegten Leitungen ausgehend von der Übergangsstelle in einen Verbindungsraum innerhalb der Windkraftanlage geführt sind,
- eine Schaltanlage innerhalb der Windkraftanlage,
- die Leitungen eines Leitungssatzes nach einem der Ansprüche 8 bis 10, dass an einem Ende mit der Schaltanlage verbunden ist und an einem anderen Ende in den Verbindungsraum geführt ist, wobei die Verbindungsmittel der Leitungen des Kabels mit den Verbindungsmitteln der Leitungen des Leitungssatzes verbunden sind, wobei in einer Verlaufsrichtung der Leitungen die Verbindungsmittel zueinander versetzt sind.

10. Windkraftanlage nach Anspruch 9,
**dadurch gekennzeichnet,**
- **dass** das Kabel unterhalb einer Wasseroberfläche durch eine Einführung in einen Turm der Windkraftanlage eingeführt ist und von der Einführung zu dem Cable Hang Off geführt ist.

11. Windkraftanlage nach Anspruch 9 oder 10,
**dadurch gekennzeichnet,**
- **dass** an der Übergangsstelle die Armierung radial gespreizt ist und in dem Cable Hang Off fixiert ist.

12. Windkraftanlage nach einem der Ansprüche 9 bis 11,
**dadurch gekennzeichnet,**
- **dass** das Verbindungsmittel des Leitungssatzes ein Hochvolt-Steckverbinder ist und dass das Verbindungsmittel des Kabels eine Hochvolt-Verbindungsbuchse ist oder
- **dass** das Verbindungsmittel des Leitungssatzes eine Hochvolt-Verbindungsbuchse ist und dass das Verbindungsmittel des Kabels ein Hochvolt-Steckverbinder und/oder
- **dass** der Hochvoltsteckverbinder ein Außenkonus-Steckverbinder ist und/oder
- **dass** die eine Hochvolt-Verbindungsbuchse eine Innenkonus-Verbindungsbuchse ist.

13. Windkraftanlage nach einem der Ansprüche 9 bis 12,
**dadurch gekennzeichnet,**
- **dass** jeweils ein Hochvolt Steckverbinder einer Leitung des Kabels und ein Hochvolt Steckverbinder einer Leitung des Leitungssatzes mit einer gemeinsamen Verbindungsmuffe verbunden sind und eine elektrische Verbindung zwischen der Steckverbindern über die Verbindungsmuffe gebildet ist und/oder,
- **dass** der Hochvolt Steckverbinder des Leitungssatzes eine zu dem Steckverbinder des Kabels komplementäre Anschlussgeometrie aufweist, so dass die Steckverbinder unmittelbar miteinander elektrisch verbindbar sind.

14. Windpark mit zumindest zwei Windkraftanlagen nach einem der Ansprüche 9 bis 13, wobei zwei Windkraftanlagen miteinander oder zumindest eine Windkraftanlage mit einer Offshore Substation über ein Kabel nach einem der Ansprüche 1 bis 15 verbunden sind.

15. Windpark nach Anspruch 14, bei dem eine Schalteinrichtung innerhalb der Windkraftanlage über einen Leitungssatz nach einem der Ansprüche 6 bis 8 mit einem Kabel nach einem der Ansprüche 1 bis 5 verbunden ist, wobei im Bereich der Verbindung zwischen dem Leitungssatz und dem Kabel die Verbindungsmittel der jeweils miteinander verbundenen Leitungen in einer Verlaufsrichtung der Leitungen zueinander versetzt sind.
